# EUROPEAN PATENT SPECIFICATION

(11) **EP 1 861 595 B1**
(45) Date of publication and mention of the grant of the patent: **27.08.2008**
(21) Application number: 06742520.7
(22) Date of filing: 20.03.2006
(51) Int. Cl.: F01P 3/20, B60T 10/02, B60H 1/00

(54) **RAILCAR COMPRISING A DIESEL ENGINE AND METHOD FOR COOLING A DIESEL ENGINE OF A RAILCAR**
SCHIENENFAHRZEUG MIT DIESELMOTOR UND KÜHLVERFAHREN FÜR EINEN DIESELMOTOR EINES SCHIENENFAHRZEUGS
AUTORAIL COMPRENANT UN MOTEUR DIESEL, ET PROCEDE PERMETTANT DE REFROIDIR LE MOTEUR DIESEL D'UN AUTORAIL

(30) Priority: 21.03.2005 GB 0505750
(43) Date of publication of application: 05.12.2007
(73) Proprietor: Bombardier Transportation GmbH, 13627 Berlin (DE)
(72) Inventor: JAHN, Steffen, 16761 Hennigsdorf (DE)
(74) Representative: Cohausz & Florack
(86) International application number: PCT/EP2006/002546
(87) International publication number: WO 2006/100020

(56) References cited:
- WO-A-94/00323
- DE-A1- 4 032 701
- DE-A1- 4 102 929
- DE-A1- 10 006 873
- US-A- 5 211 334
- US-A- 5 291 960
- US-A- 5 938 114

## Description

### FIELD OF THE INVENTION

This invention relates to a diesel railcar comprising a cooling and heating system, and to a method for cooling a diesel engine of a railcar.

### BACKGROUND OF THE INVENTION

In motor vehicles, which are driven by internal combustion engines, the engine is cooled with a liquid coolant so that the engine does not exceed a critical temperature. Cooling systems for motor vehicles are known which are provided with a latent heat accumulator. The latent heat accumulator can store the received heat quantity comparatively long (e.g. approximately 48 hours). The stored heat quantity is used to pre-warm the engine in advance of starting or to pre-warm the passenger compartment.

In modern diesel railcars the waste heat of the diesel engine, which dissipated via the cooling system, is used to heat and/or to air-condition the passenger compartments. However, due to the changing operating conditions of the engine this heat is not constantly available over the entire operation time.

Due to the desired operating mode with times for one run as short as possible a high portion of running with high driving and high braking power arises. This leads to an over supply of the cooling and heating system with waste heat. The cooling and heating system must be dimensioned according to the maximum waste heat flow occurring during the operation of the diesel engine.

On the other hand, during a considerable high portion of the operating time the engine is run at no-load (e.g. rolling at the desired maximum speed or standing during stand-by and waiting times in railway stations, and so on) or is switched off. In the case of such an insufficient waste heat supply the required heat is produced by additional heating devices, which leads to an energy consumption and corresponding costs for the operating company.

Such a cooling and heating system is shown by US 5 291 960.

### SUMMARY OF THE INVENTION

In view of the above mentioned problems, an object of the present invention is to optimise a cooling and heating system of a diesel railcar with respect to its efficiency. It is another object of the invention to provide a method for cooling a diesel engine of a railcar which results in a relief of the cooling system and thus allows the use of a smaller cooling system.

The railcar according to the invention includes:
a diesel engine,
a cooling and heating system having a first cooling liquid passage for conveying cooling liquid flowing from a cooling liquid outlet of said diesel engine to an inlet of a radiator, and a second cooling liquid passage for conveying cooling liquid from an outlet of said radiator device to a cooling liquid inlet of said diesel engine,
a heat exchanger for transferring waste heat of a brake resistance and/or waste heat of a hydrodynamic retarder to the cooling liquid, and
a latent heat accumulator connected to the first cooling liquid passage, wherein the latent heat accumulator functions as an equaliser by taking up heat peaks of the cooling liquid during high heat load periods of the cooling and heating system and by conveying stored heat during low heat load periods of the cooling and heating system, wherein a heat transfer from the cooling liquid to the latent heat accumulator takes place when the cooling liquid temperature in the first cooling liquid passage has reached a given cooling liquid temperature which is lower than a preset maximum cooling liquid temperature limit at the inlet of the radiator.

The advantage achieved with the invention is especially that the maximum waste heat flow, which has to be dissipated by means of the cooling system, is reduced. In other words, the dissipated waste heat flow is equalised. Accordingly, the operation of a fan associated to the radiator of the cooling system is less often necessary. Thereby the noise emitted by the fan will be reduced, in particular with regard to the noise of a diesel railcar during the stop time in railway stations. In addition or alternatively, the invention makes it possible to operate the radiator fan with a reduced rotational speed. The noise level caused by the radiator fan will be reduced accordingly. Moreover, a smaller cooling system can be used.

In accordance with a preferred embodiment of the invention a heat transfer from the heat accumulator to the cooling liquid and/or to a heating device of the vehicle takes place when the cooling liquid temperature in the second cooling liquid passage is higher than a preset working temperature at the cooling liquid inlet of said internal combustion engine. This embodiment leads to an improved averaging of the cooling liquid temperature. A more constant coolant temperature results in less thermal stresses in the cooling and heating system and in a longer lifetime of its components. Furthermore, the waste heat stored in the heat accumulator can be used to heat and/or air-condition the passenger compartments whereby the energy required for heating can be saved.

According to another embodiment of the invention the heat accumulator is connected to the second cooling liquid passage and includes a phase change material whose phase change takes place at a temperature lying between the preset maximum cooling liquid temperature limit at the inlet of the radiator and a working temperature at the cooling liquid inlet of said internal combustion engine. The advantage of this further embodiment of the invention is seen in that the averaging of the cooling liquid temperature can be achieved without additional controlling means.

In still another embodiment the cooling system according to the invention comprises a bypass for bridging over a section of the first cooling liquid passage, temperature detecting means for detecting the temperature of the cooling liquid in the first cooling liquid passage, and a valve for opening said bypass passage corresponding to the temperature detected by said temperature detecting means, wherein the heat accumulator is connected via said bypass to the first cooling liquid passage. This embodiment is advantageous if a latent heat accumulator with a phase change material is used whose phase change takes place at a temperature below the desired working temperature of the engine or the desired temperature of the cooling liquid in the first cooling liquid passage, respectively. In order to avoid a premature cooling of the cooling liquid in the warm-up time of the engine the cooling system according to this embodiment of the invention is controlled in such a way that the valve for opening the bypass is opened at a temperature lying a preset amount above the desired temperature of the cooling liquid in the first cooling liquid passage.

In accordance with another convenient embodiment of the invention the cooling system is provided with a heat exchanger for transferring waste heat of one or more other vehicle components to the cooling liquid, namely waste heat of an engine gear and/or waste heat of a charge cooling device of a turbo-supercharger. If the cooling liquid is used for heating the vehicle compartment, which is preferably the case in a diesel railcar according to the invention, the waste heat of these vehicle components will be used for heating purposes. This embodiment thus leads to advantageous energy savings.

### BRIEF DESCRIPTION OF THE DRAWINGS

Preferred embodiments of the present invention are now described with reference to the accompanying drawings in which:
- Figure 1: shows a schematic of a cooling and heating system of a motor vehicle according to a first embodiment of the invention;
- Figure 2: shows a schematic of a cooling and heating system of a motor vehicle according to a second embodiment of the invention;
- Figure 3: shows a schematic of a cooling and heating system of a motor vehicle according to a third embodiment of the invention;
- Figure 4: shows a schematic of a cooling and heating system of a motor vehicle according to a forth embodiment of the invention; and
- Figure 5: shows a schematic of a cooling and heating system of a motor vehicle according to a fifth embodiment of the invention.

### DESCRIPTION OF THE PRESENTLY PREFERRED EMBODIMENTS OF THE INVENTION

Like parts are denoted by like reference numerals in the three embodiments of the invention.

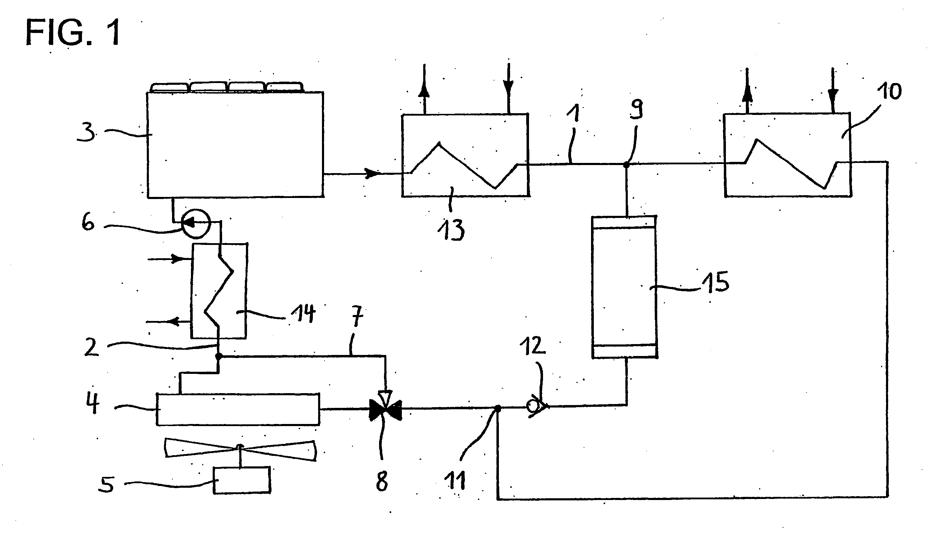

Figure 1 shows a schematic illustration of a cooling and heating system of a motor vehicle, in particular a diesel railcar, according to the invention. A cooling liquid passage, including a first cooling liquid passage 1 and a second cooling passage 2, extending from a cooling liquid outlet of an diesel engine 3 reaches a radiator device 4, passes through the radiator 4 and is connected to a cooling liquid inlet of the diesel engine 3. The radiator 4 is provided with a fan 5 for increasing the heat transmission at the radiator. A coolant pump 6 on the engine circulates the cooling liquid. The cooling liquid passage has a bypass passage 7 bridging over the radiator 4.

A three-way valve 8 is arranged at the branch-off point. The valve 8 is provided with a thermostat. The valve 8 opens the bypass passage 7 and closes the passage leading to the radiator 4 corresponding to the thermostat. During the warm-up situation of the cold engine 3 the passage through the radiator 4 is closed in order to shorten the warm-up time of the engine 3. When the temperature of the cooling liquid reaches the desired working temperature of the engine 3, the three-way valve 8 closes the bypass 7 and opens the passage leading to the radiator 4.

The cooling liquid passage has a second branch-off point 9 arranged near the cooling liquid outlet of the diesel engine 3. This branch-off point 9 serves to supply a heating and/or air-conditioning device 10 with hot liquid. The branched-off liquid is returned to the first cooling liquid passage 1 at a connection point 11 which is arranged upstream the bypass branch-off point of the radiator 4. The passage leading through the heating and/or air-conditioning device 10 can be termed as heating circuit. This heating circuit may be provided with a pump, a flow control valve and/or throttle device (not shown). The cooling liquid passage section bridging the heating circuit is provided with a flap valve 12 (check valve) in order to prevent that the cooling liquid used in the heating circuit flows in the direction of the cooling liquid outlet of the diesel engine 3.

Furthermore, the cooling liquid passage is provided with a heat exchanger 13 which is arranged between the cooling liquid outlet of the diesel engine 3 and the branch-off point 9 of the heating circuit. Another heat exchanger 14 is arranged between the cooling liquid outlet of the radiator 4 and the cooling liquid inlet of the diesel engine 3. By means of these heat exchangers 13, 14 waste heat of an engine gear, waste heat of a charge cooling device of a turbo-supercharger, waste heat of a hydrodynamic retarder and/or waste heat of brake resistances (not shown) is transferred to the cooling liquid.

Moreover, the cooling liquid passage is provided with a latent heat accumulator 15. In the embodiment shown in Fig. 1 the latent heat accumulator 15 is arranged in the cooling liquid passage bridging the heating circuit, namely between the branch-off point 9 and the flap valve 12 (check valve). The purpose of the heat accumulator 15 is to relieve the cooling system by taking up heat peaks of the cooling liquid during high heat load periods of the cooling system. The heat transfer from the cooling liquid to the heat accumulator 15 takes place when the cooling liquid temperature in the first cooling liquid passage has reached a discrete or given cooling liquid temperature which is lower than a preset maximum cooling liquid temperature limit at the inlet of the radiator device. For example, the heat transfer from the cooling liquid to the heat accumulator 15 may start when the cooling liquid temperature in the first cooling liquid passage amounts to more than 60, 70 or 80 percent of a preset maximum cooling liquid temperature limit at the inlet of the radiator device 4.

The heat stored in heat accumulator 15 is conveyed to the cooling and/or heating system during low heat load periods of the cooling system. Thus, the heat accumulator 15 acts as an equaliser relieving the cooling system.

According to the invention it is possible that the heat transfer from the heat accumulator 15 to the cooling liquid and/or to the heating or air-conditioning device 10 takes place when the cooling liquid temperature in the second cooling liquid passage 2 is higher than a preset working temperature at the cooling liquid inlet of the diesel engine 3.

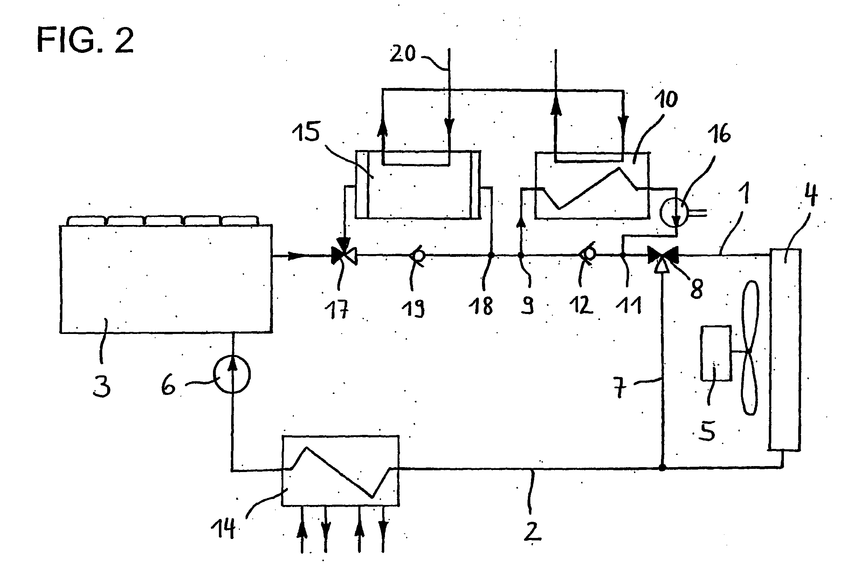

Fig. 2 shows another embodiment of the invention. Again a cooling liquid passage, including a first cooling liquid passage 1 and a second cooling passage 2, extending from a cooling liquid outlet of an diesel engine 3 reaches a radiator device 4, passes through the radiator 4 and is connected to a cooling liquid inlet of the diesel engine 3. The cooling liquid is circulated by a coolant pump 6 driven by the diesel engine 3.

The radiator 4 is provided with a fan 5 whose rotational speed is controlled according to the temperature of the cooling liquid at the cooling liquid inlet of the diesel engine 3. A bypass passage 7 bridging over the radiator 4 is arranged between the first cooling liquid passage 1 and the second cooling passage 2. The branch-off point of the bypass 7 is formed by a three-way valve 8 which is controlled by a thermostat.

Downstream from the radiator 4 and the bypass 7 there is a heat exchanger 14. By means of the heat exchanger 14 waste heat of a charge cooling device of a turbo-supercharger, of an engine gear, of a hydrodynamic retarder and/or waste heat of brake resistances (not shown) is transferred to the cooling liquid.

Upstream from the three-way valve 8 in the first cooling liquid passage 1 there is a second branch-off point 9 with a passage leading to a heat exchanger 10 which is part of a heating system for heating one or more vehicle compartments. The passage connected to the heat exchanger 10 is provided with a pump 16 for conveying hot cooling liquid branched-off from the first cooling liquid passage 1. The branched-off cooling liquid is returned to the first cooling liquid passage 1 at a connection point 11 which is also arranged upstream from the three-way valve 8 but downstream from the branch-off point 9. Between the branch-off point 9 and the connection point 11 there is a flap valve 12 (check valve) in order to prevent that the cooling liquid used in the heating system flows back in the direction of the cooling liquid outlet of the diesel engine 3.

Upstream from the branch-off point 9 there is another branch-off point formed by a thermostat controlled three-way valve 17. A bypass passage connected to the three-way valve 17 and to a connection point 18 which is arranged in the first cooling liquid passage 1 downstream from the three-way valve 17 comprises a latent heat accumulator 15. The section of the first cooling liquid passage 1 lying between the three-way valve 17 and the connection point 18 may be provided with a flap valve 19 (check valve).

When the diesel railcar is operated such that the time for one run is as short as possible a high portion of running with high driving and high braking power arises. Accordingly, the cooling system is burdened by additional waste heat. The latent heat accumulator 15 is used to relieve the cooling system during high heat load periods. For this purpose the three-way valve 17 is controlled by a thermostat in such a way that when the temperature of the cooling liquid exceeds a preset temperature the cooling liquid stream coming from the engine 3 is led at least partly via the latent heat accumulator 15. The latent heat accumulator 15 comprises containers or the like containing a suitable heat storage medium, e.g. paraffin or a suitable salt solution. In this way the heat accumulator 15 takes up heat peaks of the cooling liquid and relieves the cooling system, in particular the radiator 4.

The latent heat accumulator 15 is discharged during low heat load periods of the cooling system by transferring heat stored in the latent heat accumulator 15 to the heating system. For this purpose relatively cold heating water is pumped via a piping 20 through the latent heat accumulator 15. The relatively cold heating water used in the heating system takes up heat stored in the heat storage medium of the latent heat accumulator 15 and accordingly the temperature of the water rises. For increasing the temperature the heating water is circulated further through the heat exchanger 10.

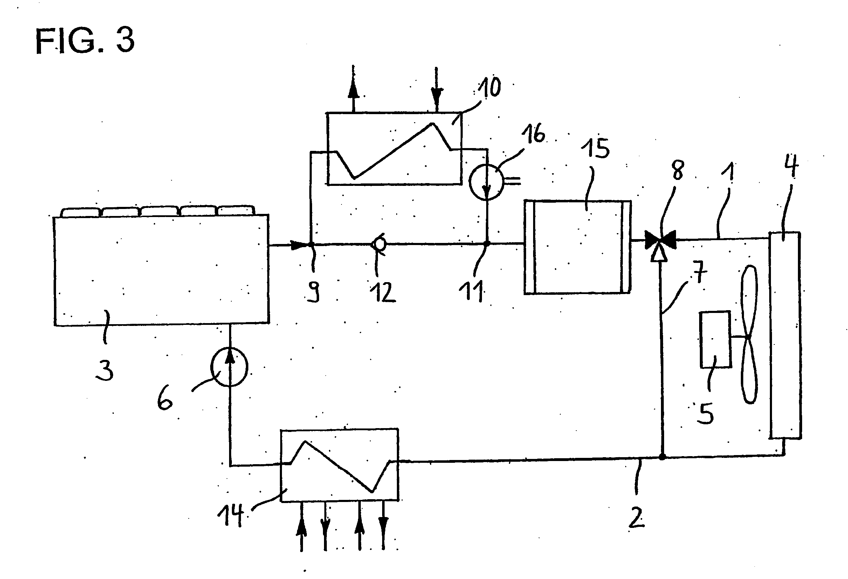

Fig. 3 shows another embodiment of the invention. This embodiment differs from the embodiment shown in Fig. 2 in that a latent heat accumulator 15 is connected to the first and second cooling liquid passages 1, 2 and includes a phase change material whose phase change takes place at a temperature lying between a preset maximum cooling liquid temperature limit at the inlet of the radiator 4 and a working temperature at the cooling liquid inlet of the diesel engine 3. The latent heat accumulator 15 is arranged in the first cooling liquid passage 1 downstream from the branch-off point 9 to which a bypass passage leading to a heat exchanger 10 for heating one a more vehicle compartments is connected.

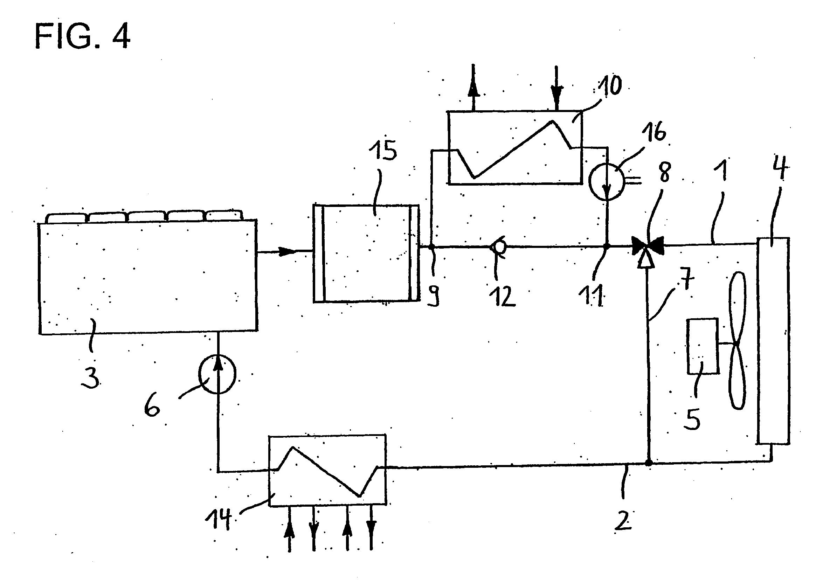

Fig. 4 shows another embodiment of the invention. This embodiment differs from the embodiment shown in Fig. 3 in that the latent heat accumulator 15 is arranged in the first cooling liquid passage 1 extending from the cooling liquid outlet of the diesel engine 3 to the radiator device 4 directly after the liquid outlet of the diesel engine 3 and before the branch-off point 9 which serves to supply a heating device 10 with hot liquid. The advantage of this embodiment is a faster charging of the latent heat accumulator 15 since the cooling liquid passing through the latent heat accumulator 15 has its highest temperature at the cooling liquid outlet of the diesel engine 3.

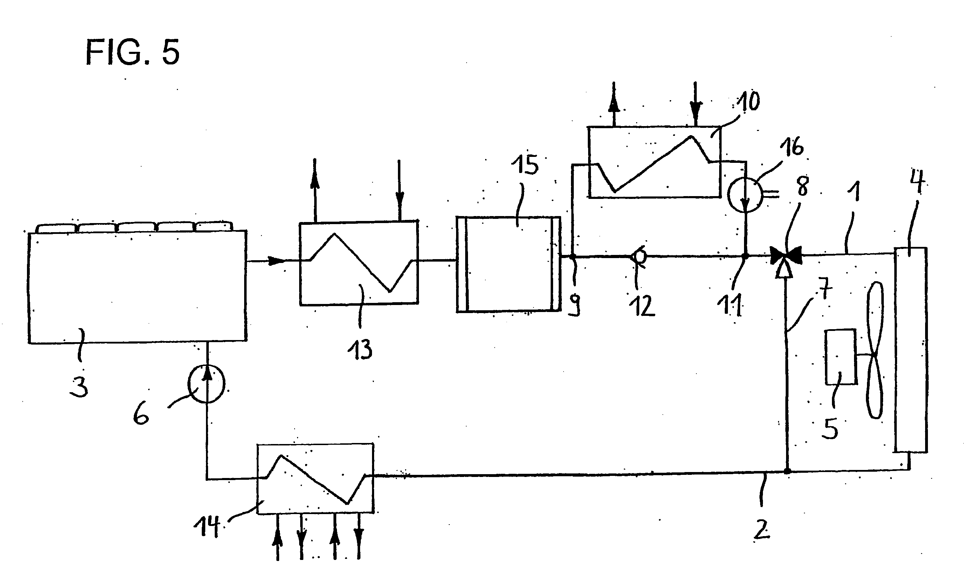

In some cases, however, first a heat exchanger 13, as shown in Fig. 1 and described above, is arranged in the cooling liquid passage 1 extending from the cooling liquid outlet of the diesel engine 3 to the radiator. In such a case the latent heat accumulator 15 may be arranged directly after the heat exchanger 13 and before the branch-off point 9 associated to the heating device 10. This case is illustrated in Fig. 5.

It is understood that the foregoing description is that of the preferred embodiments of the invention and that various changes and modifications may be made thereto without departing from the scope of the invention as defined in the appended claims.

## Claims

1. A railcar comprising:
a diesel engine (3),
a cooling and heating system having a first cooling liquid passage (1) for conveying cooling liquid flowing from a cooling liquid outlet of said diesel engine (3) to an inlet of a radiator (4), and a second cooling liquid passage (2) for conveying cooling liquid from an outlet of said radiator device to a cooling liquid inlet of said diesel engine (3),
a heat exchanger (13, 14) for transferring waste heat of a brake resistance and/or waste heat of a hydrodynamic retarder to the cooling liquid, and
a latent heat accumulator (15) connected to the first cooling liquid passage (1), **characterized in that** the latent heat accumulator (15) functions as an equaliser by taking up heat peaks of the cooling liquid during high heat load periods of the cooling and heating system and by conveying stored heat during low heat load periods of the cooling and heating system, wherein a heat transfer from the cooling liquid to the latent heat accumulator (15) takes place when the cooling liquid temperature in the first cooling liquid passage (1) has reached a given cooling liquid temperature which is lower than a preset maximum cooling liquid temperature limit at the inlet of the radiator (4).

2. A railcar according to claim 1,
wherein a heat transfer from the latent heat accumulator (15) to the cooling liquid and/or to a heating device (10) of the railcar takes place when the cooling liquid temperature in the second cooling liquid passage (2) is higher than a preset working temperature at the cooling liquid inlet of said diesel engine (3).

3. A railcar according to claim 1 or claim 2,
wherein the latent heat accumulator (15) is connected to the second cooling liquid passage (2) and includes a phase change material whose phase change takes place at a temperature lying between the preset maximum cooling liquid temperature limit at the inlet of the radiator (4) and a working temperature at the cooling liquid inlet of said diesel engine (3).

4. A railcar according to any of claims 1 to 3,
wherein said cooling and heating system comprises:
a bypass for bridging over a section of the first cooling liquid passage (1),
temperature detecting means for detecting the temperature of the cooling liquid in the first cooling liquid passage (1), and
a valve (17) for opening said bypass passage corresponding to the temperature detected by said temperature detecting means, wherein the latent.heat accumulator (15) is connected via said bypass to said first cooling liquid passage (1).

5. A rail car according to any of claims 1 to 4,
wherein said cooling and heating system comprises a heat exchanger for transferring waste heat of an engine gear to the cooling liquid.

6. A rail car according to any of claims 1 to 5,
wherein said cooling and heating system comprises a heat exchanger for transferring waste heat of a charge cooling device of a turbo-supercharger to the cooling liquid.

7. A rail car according to any of claims 1 to 6, comprising a passage for conveying heated liquid to a heating device (10) of the rail car, wherein said passage for conveying heated liquid to a heating device branches off the first cooling liquid passage (1).

8. A rail car according to claim 7,
wherein the heating device (10) is connected to a bypass which bridges the latent heat accumulator (15).

9. A rail car according to any of claims 1 to 8,
wherein said cooling and heating system comprises:
a bypass (7) for bridging over the radiator (4),
a thermostat, and
a valve (8) for opening said bypass (7) corresponding to said thermostat.

10. A method for cooling a diesel engine (3) of a diesel railcar, wherein the diesel railcar comprises a cooling and heating system having a first cooling liquid passage (1) for conveying cooling liquid flowing from a cooling liquid outlet of said diesel engine (3) to an inlet of a radiator (4), a second cooling liquid passage (2) for conveying cooling liquid from an outlet of said radiator (4) to an cooling liquid inlet of said diesel engine (3), at least one heat exchanger (13, 14), and a latent heat accumulator (15) connected to the first cooling liquid passage (1),
wherein waste heat of a hydrodynamic retarder and/or waste heat of a brake resistance is transferred by means of the at least one heat exchanger (13, 14) to the cooling liquid, **characterized in that**
said method comprising the steps of:
taking up heat peaks of the cooling liquid with the latent heat accumulator (15) during high heat load periods of the cooling and heating system and
discharging the latent heat accumulator (15) during low heat load periods by transferring heat stored therein to the cooling and heating system,
wherein the latent heat accumulator (15) is charged by heat from the cooling liquid when the cooling liquid temperature in the first cooling liquid passage (1) has reached a given temperature which is lower than a preset maximum cooling liquid temperature limit at the inlet of the radiator (4).

11. A method according to claim 10,
wherein the latent heat accumulator (15) is discharged by transferring heat stored therein to the cooling liquid and/or to a heating device (10) of the rail car when the cooling liquid temperature in the second cooling liquid passage (2) is higher than a preset working temperature at the cooling liquid inlet of said diesel engine (3).

12. A method according to claim 10 or to claim 11,
wherein the latent heat accumulator (15) is connected to the second cooling liquid passage (2) and wherein the latent heat accumulator (15) includes a phase change material whose phase change takes place at a temperature lying between a preset maximum cooling liquid temperature limit at the inlet of the radiator (4) and a working temperature at the cooling liquid inlet of said diesel engine (3).

13. A method according to claim 10 or to claim 11,
wherein a section of the first cooling liquid passage (1) is bridged over with a bypass which is provided with the latent heat accumulator (15) and a valve (17) for opening the bypass, and wherein the valve (17) is opened corresponding to the temperature of the cooling liquid in the first cooling liquid passage (1).

14. A method according to any of claims 10 to 13,
wherein waste heat of an engine gear and/or waste heat of a charge cooling device of a turbo-supercharger is transferred by means of a heat exchanger (13, 14) to the cooling liquid.

15. A method according to any of claims 10 to 14,
wherein hot cooling liquid of the cooling and heating system is used in a heating device (10) of the railcar.

## Patentansprüche

1. Schienenfahrzeug, umfassend:
einen Dieselmotor (3),
ein Kühl- und Heizsystem, das einen ersten Kühlflüssigkeitskanal (1) zum Transport von Kühlflüssigkeit, die von einem Kühlflüssigkeitsauslass des Dieselmotors (3) zu einem Einlass eines Kühlers (4) fließt, und einen zweiten Kühlflüssigkeitskanal (2) zum Transport von Kühlflüssigkeit von einem Auslass der Kühlereinrichtung zu einem Kühlflüssigkeitseinlass des Dieselmotors (3) aufweist,
einen Wärmetauscher (13, 14) zur Übertragung von Abwärme eines Bremswiderstands und/oder Abwärme eines hydrodynamischen Retarders auf die Kühlflüssigkeit, und
einen Latentwärmespeicher (15), der mit dem ersten Kühlflüssigkeitskanal (1) verbunden ist, **dadurch gekennzeichnet, dass** der Latentwärmespeicher (15) als eine Ausgleichseinrichtung wirkt, indem er Wärmespitzen der Kühlflüssigkeit während Perioden mit hoher Wärmebelastung des Kühl- und Heizsystems aufnimmt und indem er gespeicherte Wärme während Perioden mit niedriger Wärmebelastung des Kühlund Heizsystems abgibt, wobei eine Wärmeübertragung von der Kühlflüssigkeit auf den Latentwärmespeicher (15) stattfindet, wenn die Kühlflüssigkeitstemperatur in dem ersten Kühlflüssigkeitskanal (1) eine gegebene Kühlflüssigkeitstemperatur erreicht hat, die niedriger ist als ein voreingestellter höchster Kühlflüssigkeitstemperatur-Grenzwert am Einlass des Kühlers (4).

2. Schienenfahrzeug nach Anspruch 1,
bei welchem eine Wärmeübertragung von dem Latentwärmespeicher (15) auf die Kühlflüssigkeit und/oder eine Heizeinrichtung (10) des Schienenfahrzeugs stattfindet, wenn die Kühlflüssigkeitstemperatur in dem zweiten Kühlflüssigkeitskanal (2) höher ist als eine voreingestellte Arbeitstemperatur an dem Kühlflüssigkeitseinlass des Dieselmotors (3).

3. Schienenfahrzeug nach Anspruch 1 oder Anspruch 2,
bei welchem der Latentwärmespeicher (15) mit dem zweiten Kühlflüssigkeitskanal (2) verbunden ist und ein Phasenumwandlungsmaterial enthält, dessen Phasenumwandlung bei einer Temperatur stattfindet, die zwischen dem voreingestellten höchsten Kühlflüssigkeitstemperatur-Grenzwert am Einlass des Kühlers (4) und einer Arbeitstemperatur an dem Kühlflüssigkeitseinlass des Dieselmotors (3) liegt.

4. Schienenfahrzeug nach einem der Ansprüche 1 bis 3,
bei welchem das Kühl- und Heizsystem
eine Umgehungsleitung zur Überbrückung eines Abschnitts des ersten Kühlflüssigkeitskanals (1),
eine Temperaturerfassungseinrichtung zum Erfassen der Temperatur der Kühlflüssigkeit in dem ersten Kühlflüssigkeitskanal (1) und
ein Ventil (17) zum Öffnen des Umgehungskanals entsprechend der von der Temperaturerfassungseinrichtung erfassten Temperatur umfasst, wobei der Latentwärmespeicher (15) über die Umgehungsleitung mit dem ersten Kühlflüssigkeitskanal (1) verbunden ist.

5. Schienenfahrzeug nach einem der Ansprüche 1 bis 4,
bei welchem das Kühl- und Heizsystem einen Wärmetauscher zur Übertragung von Abwärme eines Motorgetriebes auf die Kühlflüssigkeit umfasst.

6. Schienenfahrzeug nach einem der Ansprüche 1 bis 5,
bei welchem das Kühl- und Heizsystem einen Wärmetauscher zur Übertragung von Abwärme einer Ladekühleinrichtung eines Turboladers auf die Kühlflüssigkeit umfasst.

7. Schienenfahrzeug nach einem der Ansprüche 1 bis 6, umfassend einen Kanal für den Transport von erwärmter Flüssigkeit zu einer Heizeinrichtung (10) des Schienenfahrzeugs, wobei der Kanal für den Transport erwärmter Flüssigkeit zu einer Heizeinrichtung von dem ersten Kühlflüssigkeitskanal (1) abzweigt.

8. Schienenfahrzeug nach Anspruch 7,
bei welchem die Heizeinrichtung mit einer Umgehungsleitung verbunden ist, die den Latentwärmespeicher (15) überbrückt.

9. Schienenfahrzeug nach einem der Ansprüche 1 bis 8,
bei welchem das Kühl- und Heizsystem
eine Umgehungsleitung (7) zur Überbrückung des Kühlers (4), einen Thermostat und
ein Ventil (8) zum Öffnen der Umgehungsleitung (7) entsprechend dem Thermostat umfasst.

10. Verfahren zum Kühlen eines Dieselmotors (3) eines Diesel-Schienenfahrzeugs, bei welchem der Diesel-Schienenfahrzeug ein Kühl- und Heizsystem umfasst, das einen ersten Kühlflüssigkeitskanal (1) für den Transport von Kühlflüssigkeit, die von einem Kühlflüssigkeitsauslass des Dieselmotors (3) zu einem Einlass eines Kühlers (4) fließt, einen zweiten Kühlflüssigkeitskanal (2) für den Transport von Kühlflüssigkeit von einem Auslass des Kühlers (4) zu einem Kühlflüssigkeitseinlass des Dieselmotors (3), mindestens einen Wärmetauscher (13, 14) und einen mit dem ersten Kühlflüssigkeitskanal (1) verbundenen Latentwärmespeicher (15) umfasst, wobei Abwärme eines hydrodynamischen Retarders und/oder Abwärme eines Bremswiderstands mittels des mindestens einen Wärmetauschers (13, 14) auf die Kühlflüssigkeit übertragen wird, **dadurch gekennzeichnet, dass** das Verfahren die Schritte umfasst:
Aufnehmen von Wärmespitzen der Kühlflüssigkeit mit dem Latentwärmespeicher (15) während Perioden mit hoher Wärmebelastung des Kühl- und Heizsystems und
Entladen des Latentwärmespeichers (15) während Perioden mit niedriger Wärmebelastung, indem darin gespeicherte Wärme auf das Kühl- und Heizsystem übertragen wird,
wobei der Latentwärmespeicher (15) durch Wärme von der Kühlflüssigkeit geladen wird, wenn die Kühlflüssigkeitstemperatur in dem ersten Kühlflüssigkeitskanal (1) eine gegebene Temperatur erreicht hat, die niedriger ist als ein voreingestellter höchster Kühlflüssigkeitstemperatur-Grenzwert am Einlass des Kühlers (4).

11. Verfahren nach Anspruch 10,
bei welchem der Latentwärmespeicher (15) entladen wird, indem darin gespeicherte Wärme auf die Kühlflüssigkeit und/oder eine Heizeinrichtung (10) des Schienenfahrzeugs übertragen wird, wenn die Kühlflüssigkeitstemperatur in dem zweiten Kühlflüssigkeitskanal (2) höher ist als eine voreingestellte Arbeitstemperatur am Kühlflüssigkeitseinlass des Dieselmotors (3).

12. Verfahren nach Anspruch 10 oder 11,
bei welchem der Latentwärmespeicher (15) mit dem zweiten Kühlflüssigkeitskanal (2) verbunden ist und bei welchem der Latentwärmespeicher (15) ein Phasenumwandlungsmaterial enthält, dessen Phasenumwandlung bei einer Temperatur stattfindet, die zwischen einem voreingestellten höchsten Kühlflüssigkeitstemperatur-Grenzwert am Einlass des Kühlers (4) und einer Arbeitstemperatur am Kühlflüssigkeitseinlass des Dieselmotors (3) liegt.

13. Verfahren nach Anspruch 10 oder 11,
bei welchem ein Abschnitt des ersten Kühlflüssigkeitskanals (1) durch eine Umgehungsleitung überbrückt ist, die mit dem Latentwärmespeicher (15) und einem Ventil (17) zum Öffnen der Umgehungsleitung versehen ist, wobei das Ventil (17) entsprechend der Temperatur der Kühlflüssigkeit in dem ersten Kühlflüssigkeitskanal (1) geöffnet wird.

14. Verfahren nach einem der Ansprüche 10 bis 13,
bei welchem Abwärme eines Motorgetriebes und/oder Abwärme einer Ladekühleinrichtung eines Turboladers mittels eines Wärmetauschers (13, 14) auf die Kühlflüssigkeit übertragen wird.

15. Verfahren nach einem der Ansprüche 10 bis 14,
bei welchem heiße Kühlflüssigkeit des Kühl- und Heizsystems in einer Heizeinrichtung (10) des Schienenfahrzeugs verwendet wird.

## Revendications

1. Autorail comprenant :
un moteur diesel (3),
un système de refroidissement et de chauffage qui présente un premier passage (1) de liquide de refroidissement qui transporte un liquide de refroidissement qui s'écoule entre l'orifice de sortie de liquide de refroidissement dudit moteur diesel (3) et l'orifice d'entrée d'un radiateur (4) et un deuxième passage (2) de liquide de refroidissement qui transporte le liquide de refroidissement entre l'orifice de sortie dudit dispositif de radiateur et l'orifice d'entrée de liquide de refroidissement dans ledit moteur diesel (3),
un échangeur de chaleur (13, 14) qui transfère dans le liquide de refroidissement la chaleur perdue d'une résistance de frein et/ou la chaleur perdue d'un ralentisseur hydrodynamique et
un accumulateur de chaleur latente (15) relié au premier passage (1) de liquide de refroidissement, **caractérisée en ce que** l'accumulateur (15) de chaleur latente assure une fonction d'égalisation en reprenant les pointes de chaleur du liquide de refroidissement pendant des périodes à charge thermique élevées du système de refroidissement et de chauffage et en transportant la chaleur stockée pendant les périodes à charge thermique basse du système de chauffage et de refroidissement,
un transfert de chaleur du liquide de refroidissement à l'accumulateur (15) de chaleur latente ayant lieu lorsque la température du liquide de refroidissement présent dans le premier passage (1) de liquide de refroidissement a atteint une température de liquide de refroidissement donnée inférieure à une limite maximum de température du liquide de refroidissement préfixée à l'orifice d'entrée du radiateur (4).

2. Autorail selon la revendication 1, dans lequel un transfert de chaleur entre l'accumulateur de chaleur latente (15) et le liquide de refroidissement et/ou un dispositif de chauffage (10) de l'autorail a lieu lorsque la température du liquide de refroidissement présent dans le deuxième passage (2) de liquide de refroidissement est supérieure à une température de travail préfixée à l'entrée du liquide de refroidissement dans ledit moteur diesel (3).

3. Autorail selon la revendication 1 ou la revendication 2, dans lequel l'accumulateur (15) de chaleur latente est relié au deuxième passage (2) de liquide de refroidissement et comprend un matériau qui change de phase et dont le changement de phase a lieu à une température comprise entre la limite maximale de température de liquide de refroidissement préfixée à l'orifice d'entrée du radiateur (4) et la température de travail à l'orifice d'entrée du liquide de refroidissement dans ledit moteur diesel (3).

4. Autorail selon l'une quelconque des revendications 1 à 3, dans lequel ledit système de refroidissement et de chauffage comprend :
une dérivation qui relie une partie du premier passage (1) de liquide de refroidissement,
des moyens de détection de température qui détectent la température du liquide de refroidissement présent dans le premier passage (1) du liquide de refroidissement et
une vanne (17) qui ouvre ledit passage de dérivation en correspondance à la température détectée par lesdits moyens de détection de température, l'accumulateur (15) de chaleur latente étant relié par ladite dérivation audit premier passage (1) de liquide de refroidissement.

5. Autorail selon l'une quelconque des revendications 1 à 4, ledit système de refroidissement et de chauffage comprenant un échangeur de chaleur qui transfère la chaleur perdue de la boîte de transmission du moteur vers le liquide de refroidissement.

6. Autorail selon l'une quelconque des revendications 1 à 5, dans lequel ledit système de chauffage et de refroidissement comprend un échangeur de chaleur qui transfère au liquide de refroidissement la chaleur perdue d'un dispositif de refroidissement de l'air d'admission d'un turbocompresseur.

7. Autorail selon l'une quelconque des revendications 1 à 6, comprenant un passage qui transporte le liquide chauffé vers un dispositif de chauffage (10) de l'autorail, ledit passage qui transporte le liquide chauffé dans le dispositif de chauffage par une bifurcation du premier passage (1) de liquide de refroidissement.

8. Autorail selon la revendication 7, dans lequel le dispositif de chauffage (10) est relié à une dérivation qui conduit à l'accumulateur (15) de chaleur latente.

9. Autorail selon l'une quelconque des revendications 1 à 8, dans lequel ledit système de refroidissement et de chauffage comprend :
une dérivation (7) qui relie le radiateur (4),
un thermostat et
une vanne (8) qui ouvre ladite dérivation (7) en correspondance audit thermostat.

10. Procédé de refroidissement du moteur diesel (3) d'un autorail diesel, l'autorail diesel comprenant un système de refroidissement et de chauffage qui présente un premier passage (1) de liquide de refroidissement qui transporte l'écoulement de liquide refroidissement d'un premier orifice de sortie de liquide de refroidissement dudit moteur diesel (3) à un orifice d'entrée d'un radiateur (4), un deuxième passage (2) de liquide de refroidissement qui permet de transporter le liquide de refroidissement d'un orifice de sortie dudit radiateur (4) à un orifice d'entrée de liquide de refroidissement dans ledit moteur diesel (3), au moins un échangeur de chaleur (13, 14) et au moins un accumulateur (15) de chaleur latente relié au premier passage (1) de liquide de refroidissement,
la chaleur perdue d'un ralentisseur hydrodynamique et/ou la chaleur perdue d'une résistance de frein étant transférée dans le liquide de refroidissement au moyen d'au moins un échangeur de chaleur (13, 14),
**caractérisé en ce que** ledit procédé comprend les étapes qui consistent à :
reprendre les pointes de chaleur du liquide de refroidissement par l'accumulateur (15) de chaleur latente pendant des périodes à charge thermique élevée du système de refroidissement et de chauffage et
décharger l'accumulateur de chaleur latente (15) pendant les périodes à charge thermique basse en transférant au système de refroidissement et de chauffage la chaleur qui y est stockée,
l'accumulateur de chaleur latente (15) étant chargé par la chaleur du liquide de refroidissement lorsque la température de liquide de refroidissement dans le premier passage (1) de liquide de refroidissement a atteint une température donnée inférieure à une limite de température maximale du liquide de refroidissement présent à l'orifice d'entrée du radiateur (4) .

11. Procédé selon la revendication 10, dans lequel l'accumulateur de chaleur latente (15) est déchargé en transférant la chaleur qui y est stockée au liquide de refroidissement et/ou à un dispositif de chauffage (10) de l'autorail lorsque la température du liquide de refroidissement présent dans le deuxième passage (2) de liquide de refroidissement est supérieure à une température de travail préfixée à l'orifice d'entrée du liquide de refroidissement dans ledit moteur diesel (3).

12. Procédé selon la revendication 10 ou la revendication 11, dans lequel l'accumulateur de chaleur latente (15) est relié à un deuxième passage (2) de liquide de refroidissement et dans lequel l'accumulateur de chaleur latente (15) comprend un matériau qui change de phase et dont le changement de phase a lieu à une température située entre une limite maximale de température de liquide de refroidissement préfixée à l'orifice d'entrée du radiateur (4) et une température de travail à l'orifice d'entrée du liquide de refroidissement dans ledit moteur diesel (3).

13. Procédé selon la revendication 10 ou la revendication 11, dans lequel une partie du premier passage (1) de liquide de refroidissement est reliée à une dérivation dotée de l'accumulateur (15) de chaleur latente et d'une vanne (17) qui ouvre la dérivation, et dans lequel la vanne (17) est ouverte en fonction de la température du liquide de refroidissement présent dans le premier passage (1) de liquide de refroidissement.

14. Procédé selon l'une quelconque des revendications 10 à 13, dans lequel la chaleur perdue de la boîte de transmission du moteur et/ou la chaleur perdue d'un dispositif de refroidissement d'air d'admission d'un turbocompresseur sont transférées au liquide de refroidissement au moyen d'un échangeur de chaleur (13, 14).

15. Procédé selon l'une quelconque des revendications 10 à 14, dans lequel le liquide de refroidissement chaud du dispositif de refroidissement et de chauffage est utilisé dans un dispositif de chauffage (10) de l'autorail.
